# EUROPÄISCHE PATENTSCHRIFT

(11) **EP 4 268 029 B1**
(45) Veröffentlichungstag und Bekanntmachung des Hinweises auf die Patenterteilung: **20.11.2024**
(21) Anmeldenummer: 22716065.2
(22) Anmeldetag: 17.03.2022
(51) Int. Cl.: G05B 17/02, G05B 19/418, G05B 13/02, G05B 13/04

(54) **VERFAHREN UND SYSTEM ZUR ÜBERWACHUNG DES BETRIEBS EINER TECHNISCHEN ANLAGE**
METHOD AND SYSTEM FOR MONITORING THE OPERATION OF A TECHNICAL SYSTEM
PROCÉDÉ ET SYSTÈME DE SUPERVISION DU FONCTIONNEMENT D'UNE INSTALLATION TECHNIQUE

(30) Priorität: 19.03.2021 EP 21163758
(43) Veröffentlichungstag der Anmeldung: 01.11.2023
(73) Patentinhaber: Siemens Aktiengesellschaft, 80333 München (DE)
(72) Erfinder: BIERWEILER, Thomas, 76297 Stutensee (DE); LABISCH, Daniel, 76149 Karlsruhe (DE)
(74) Vertreter: Siemens Patent Attorneys
(86) Internationale Anmeldenummer: PCT/EP2022/057083
(87) Internationale Veröffentlichungsnummer: WO 2022/195050

(56) Entgegenhaltungen:
- US-A1- 2015 073 751
- US-A1- 2018 046 917
- US-B1- 6 321 216

## Beschreibung

Die Erfindung betrifft ein Verfahren und ein entsprechendes System zur Überwachung des Betriebs einer technischen Anlage, in welcher ein verfahrenstechnischer Prozess mit mindestens einem Prozessschritt abläuft. Die Erfindung betrifft ferner ein dazugehöriges Computerprogramm und Computerprogrammprodukt.

Der Betrieb verfahrenstechnischer Produktionsanlagen wird durch eine Vielzahl von Prozessparametern, Betriebsparametern, Produktionsbedingungen, Anlagenbedingungen und Einstellungen beeinflusst. Einige dieser Einflussgrößen können vom Anlagenfahrer bzw. der Automatisierung vorgegeben werden, andere können zwar nicht beeinflusst, jedoch gemessen werden, und darüber hinaus wirken noch unbekannte Einflüsse. Hinzu kommt häufig eine große Komplexität des Prozesses, sodass die Auswirkung der Änderung einer beeinflussbaren Größe nicht vorab bekannt ist. Um ungünstige Betriebszustände zu vermeiden, wird eine Produktionsanlage fortwährend umfassend zumeist mittels eines Prozessleitsystems und häufig auch durch zusätzliche Systeme überwacht. Kleinere Abweichungen resultieren ggf. nur in Qualitätseinbußen, größere Abweichungen können bereits zu Produktionsausfällen führen oder stellen sogar ein Sicherheitsrisiko dar.

Eine Identifikation von größeren Abweichungen oder Anomalien in verfahrenstechnischen Produktionsanlagen ist aus der EP3282399B1 oder US 2018/046917 A1 ekannt. Dabei wird eine selbstorganisierende Karte mit historischen Prozessdaten trainiert, um den Zustand der Anlage zu erfassen. Schwellwerte für den euklidischen Abstand der Zustandsvektoren werden ermittelt und gespeichert. Die aktuellen Prozessdaten werden mithilfe der trainierten Karte ausgewertet, um Abweichungen vom Normalzustand zu erkennen.

Ein Verfahren zur Analyse und Darstellung von transienten Prozessvorgängen ist aus der EP0845720B1 bekannt. Um eine gleichzeitige und zusammenhängende Bewertung und Anzeige relevanter Prozessgrößen der Anlage zu ermöglichen, wird vorgeschlagen, die relevanten Prozessgrößen durch eine Analyse auf Grundlage selbstorganisierender Karten in Beziehung zueinander auszuwerten, indem eine topologieerhaltende Projektion von Daten der relevanten Prozessgrößen auf die Karte realisiert wird. Auf dieser Karte werden die aktuellen Prozessverläufe als Trajektorien aufgetragen. Eine Auswertung im Sinn einer Diagnose kann entweder visuell oder auch automatisiert erfolgen.

Neben der Überwachung des aktuellen Anlagenzustands gibt es häufig den Wunsch, auch das zukünftige Verhalten zu prognostizieren, um so noch früher auf drohende Abweichungen reagieren zu können. Auch im Bereich der vorausschauenden Wartung von technischen Anlagen sind Prädiktionen des zukünftigen Prozessverhaltens wünschenswert.

Die einfachste Möglichkeit einer Prädiktion liefert die Extrapolation des aktuellen Verhaltens in die Zukunft. Dabei wird, je nach Prozessdynamik, die jüngere Vergangenheit betrachtet und in die Zukunft extrapoliert. Dabei bleiben jedoch viele Effekte aus der früheren Vergangenheit unberücksichtigt, sodass das Ergebnis meist nicht aussagekräftig ist. Um das Verhalten einer Produktionsanlage verlässlich prognostizieren zu können, kommt üblicherweise die Simulation eines dynamischen Prozessmodells zum Einsatz. In der Regel lässt sich eine nutzbare Güte nur über die rigorose Modellierung des Prozesses erzielen. Die Modelle sind dabei häufig nichtlinear und benötigen sehr viele dynamische Variablen. Die erforderliche Modellierung ist im Allgemeinen sehr aufwändig, was sich in vielen Anwendungsfällen nicht lohnt. Zudem muss das Prozessmodell noch um das Anlagenmodell -insbesondere um Modelle der Automatisierung und Regelung - erweitert werden, um auch das reale Verhalten wiedergeben zu können. Insgesamt werden simulationsbasierte Prädiktionen daher nur in wenigen Anwendungsfällen wirklich realisiert, und zwar dort, wo sich der hohe wirtschaftliche Aufwand lohnt. Alternativ können Simulationsmodelle auch datenbasiert eingelernt werden. Etablierte Identifikationsverfahren existieren jedoch größtenteils nur für lineare dynamische Modelle. Diese können komplexe Prozesse jedoch nur in der Umgebung eines Arbeitspunktes zufriedenstellend abbilden. Die datenbasierte Identifikation eines allgemeinen nichtlinearen dynamischen Modells ist jedoch kaum möglich, da sich ohne eine Strukturvorgabe für das Modell eine quasi unendlich große Vielfalt an Variationsmöglichkeiten ergibt. Die Anwendung von datenbasierten Simulationsmodellen beschränkt sich daher auf lineare Systeme, die höchstens gezielt durch einzelne Nichtlinearitäten erweitert werden.

Es ist daher die Aufgabe der vorliegenden Erfindung für dynamische, insbesondere diskontinuierliche Prozesse ein datenbasiertes Verfahren und System zur Prädiktion des Betriebs einer technischen Anlage anzugeben, welches keine aufwändige Modellierung von komplexen nichtlinearen dynamischen Prozessen benötigt und zusätzlich eine hohe Zuverlässigkeit aufweist. Davon ausgehend liegt der Erfindung die Aufgabe zugrunde, ein geeignetes Computerprogramm, Computerprogrammprodukt und eine graphische Benutzeroberfläche anzugeben.

Diese Aufgabe wird durch die Merkmale des unabhängigen Patentanspruchs 1 gelöst. Außerdem wird die Aufgabe gelöst durch ein System nach Anspruch 7, ein Computerprogramm nach Anspruch 9 und ein Computerprogrammprodukt nach Anspruch 10

Ausgestaltungen der Erfindung, die einzeln oder in Kombination miteinander einsetzbar sind, sind Gegenstand der Unteransprüche.

Unter der Voraussetzung, dass historische Daten des Prozesses vorhanden sind, wird nachfolgend erfindungsgemäß eine Vorhersage des zukünftigen dynamischen Prozessverhaltens mit Hilfe von selbstorganisierenden Karten (SOMs) vorgeschlagen.

Eine selbstorganisierende Karte (engl. "self-organizing map", abgekürzt SOM) ist eine Art künstliches neuronales Netzwerk, das durch einen nicht überwachten Lernprozess eingelernt wird, um eine zweidimensionale, diskretisierte Abbildung des Eingaberaums der eingelernten Daten, die als Karte bezeichnet wird, zu erstellen. Diese Karten sind nützlich für die Klas-sifizierung und Visualisierung niederdimensionaler Ansichten von hochdimensionalen Daten, wie sie in der Prozessindustrie vorliegen. Die Karte besteht aus Neuronen oder Knoten in einer bestimmten Topologie (z.B. 6 x 8 Neuronen in Matrizenform angeordnet). Jedes Neuron entspricht einem Vektor oder n-Tupel. der Dimension n x 1, wobei die Dimension des Vektors z.B. der Anzahl n der Eingangssignale entspricht. Bei den Daten eines Vektors kann es sich beispielsweise um Prozessvariablen wie Temperatur, Druck, Luftfeuchtigkeit etc. handeln sowie um Stellgrößen, Sollwerte oder messbare Störgrößen, d.h. alle Größen, die in direktem Zusammenhang mit dem verfahrenstechnischen Prozess stehen und somit einen Datensatz bilden, der einen Prozesszustand charakterisiert. Eine SOM stellt somit eine Abbildung des Prozessverhaltens dar. Werden SOMs mit "Gut-Daten" eingelernt, stellen sie das Normalverhalten des Prozesses dar. Grundsätzlich ist jedoch auch das Einlernen mit "Schlecht-Daten" einer SOM möglich, um ein fehlerhaftes Verhalten des Prozesses abzubilden. Dies bedeutet, dass mit SOMs jegliches Prozessverhalten darstellbar ist. Einzige Voraussetzung dabei ist, dass die Lerndaten repräsentativ für alle im Betrieb auftretenden Fahrweisen und Ereignisse sind.

Dieses in der SOM auf Basis der eingelernten Daten implizit vorhandene Wissen wird nun erfindungsgemäß für die Prädiktion eines Prozessverlaufs genutzt. Dies ist sowohl für kontinuierliche Prozesse mit nur einem Prozessschritt als auch für Batch-Prozesse mit mehreren Prozessschritten, die in chargenorientierter Fahrweise nach ISA-88 zum Beispiel mithilfe von Ablaufsteuerungen (englisch: sequential functional control, abgekürzt SFC) oder auch Schrittketten betrieben werden, möglich.

Die Erfindung betrifft demnach ein Verfahren und System zur Überwachung des Betriebs einer technischen Anlage, in welcher ein verfahrenstechnischer Prozess mit mindestens einem Prozessschritt abläuft, wobei den Betrieb der Anlage kennzeichnende Datensätze mit Werten von Prozessvariablen zeitabhängig erfasst und in einem Datenspeicher abgelegt werden und in einer Lernphase unter Verwendung historischer Datensätze pro Prozessschritt oder Batch eine selbstorganisierende Karte (SOM) eingelernt wird, pro SOM Symptom-Schwellwerte und deren Toleranzen für jedes Neuron ermittelt und gespeichert werden und pro Prozessschritt oder Batch für alle Zeitstempel alle zulässigen, zeitlichen Verläufe von Siegerneuronen ermittelt und gespeichert werden. Die Erfindung ist dadurch gekennzeichnet, dass in einer Auswertungsphase ein Zeitpunkt bestimmt wird, ab welchem eine Prädiktion des Betriebs der technischen Anlage stattfinden soll, dass anschließend unter Verwendung aktueller Datensätze mindestens eines Prozessschritts mittels der eingelernten Siegerneuronenverläufe mindestens ein Siegerneuronenverlauf für den gesamten Prozessschritt oder Batch ermittelt wird und dass die in den Neuronen dieses Siegerneuronenverlaufs gespeicherten Werte der Prozessvariablen nach dem zuvor bestimmten Zeitpunkt als prädizierter Verlauf auf einer Ausgabeeinheit angezeigt werden und somit einen Bediener der technischen Anlage bei der Anlagenüberwachung unterstützt.

Die Vorteile des erfindungsgemäßen Verfahrens und Systems sind vielfältig. Zum einen ermöglicht die Vorhersage des zukünftigen dynamischen Prozessverhaltens einem Anlagenfahrer frühzeitige korrigierende Eingriffe in den Betrieb der technischen Anlage, wenn auf den prädizierten Verläufen beispielsweise Abweichungen vom Normalbetrieb erkennbar sind. Zum anderen erleichtern Abweichungen zwischen tatsächlichem und prognostiziertem Verhalten die Ursachensuche bei auftretenden Anomalien. Das Verfahren lässt sich demzufolge auch mit einer Anomalie-Erkennung kombinieren. Passen die aktuellen Datensätze nicht zur SOM bzw. zum Siegerneuronen-Verlauf, so weicht das aktuelle Verhalten vom gelernten ab. Dies kann als Anomalie gemeldet werden.

Im Gegensatz zur Simulation eines rigorosen Prozessmodells entfällt der Aufwand für die Modellierung komplett. Der Einlernvorgang der SOM lässt sich vorteilhafterweise komplett automatisieren, sodass keine Parameter vom Anwender vorgegeben werden müssen. Im Gegensatz zu datenbasierten linearen dynamischen Modellen kann die SOM in Verbindung mit den Verläufen auch ein komplexes nichtlineares Verhalten abbilden. Da die Erfindung insbesondere für Batch-Prozesse geeignet ist, kann sie vorteilhaft innerhalb der pharmazeutischen Industrie bei der Produktion von Medikamenten oder Impfstoffen verwendet werden.

Im Folgenden werden die einzelnen Schritte des Anspruchs 1 im Detail erläutert:
In der Lernphase wird unter Verwendung historischer Datensätze pro Prozessschritt oder Batch eine selbstorganisierende Karte (SOM) eingelernt:
In der Lernphase werden für jedes Neuron (= Knoten) der selbstorganisierenden Karte die n-Tupel (= einen bestimmten Betrieb der Anlage kennzeichnende Datensätze mit den entsprechenden Werten der Prozessvariablen) der Neuronen berechnet und in einem Datenspeicher abgelegt. Alle Neuronen der Karte repräsentieren nach dem Lernvorgang einen typischen Zustand der Lerndaten, wobei im Allgemeinen keines der Neuronen genau einem tatsächlichen Zustand entspricht. Die Werte der n-Tupel der Neuronen sind nach der Lernphase bestimmt. Die Größe der Karte, also die zweidimensionale Anordnung der Neuronen, kann von vorherein festgelegt werden oder während der Lernphase manuell oder automatisch optimiert und angepasst werden. Dazu können in einem ersten Schritt eine Vielzahl von SOMs zufällig initialisiert werden, woraus die beste Karte, d.h. die Karte mit dem kleinsten Abstandsmaß zu jedem Neuron, vorausgesetzt alle Neuronen werden getroffen, ausgesucht wird (Unter dem Begriff "Treffer" ist gemeint, dass der Betrag der Differenz aus Lerndatenvektor und dem Datensatz eines Neurons gebildet wird. Das Neuron mit der geringsten Differenz aus Lerndatenvektor und dem Datensatz des Neurons ist das "getroffene" Neuron). Weitere Kriterien, wie z.B. eine Mindestanzahl von Mehrfachtreffern der Trainingsdaten, können genutzt werden. Es kann ferner auch ein iteratives Verfahren genutzt werden, bei dem mit einer Kartengröße viele SOMs zufällig initialisiert und eingelernt werden und anschließend anhand der Trainingsdaten die Anzahl der Treffer pro Neuron ermittelt werden. Danach wird in Abhängigkeit von der Trefferanzahl wiederholt ermittelt, ob die Karte zu groß oder zu klein ist. Die Iteration wird so lange weitergeführt, bis die größte Karte, die gerade nicht zu groß ist, gefunden ist. Durch diese Vorgehensweise werden optimale Voraussetzungen für eine optimale Prozessprädiktion geschaffen. Eine nahezu optimale Kartengröße steigert die Effizienz des Verfahrens und verhindert unnötige Rechenzeiten (durch die Auswertung von ohnehin nicht getroffenen Neuronen).

In einem nächsten Schritt der Lernphase werden pro SOM Symptom-Schwellwerte und deren Toleranzen für jedes Neuron ermittelt und abgespeichert:
Bei einem Symptom-Schwellwert handelt es sich um die Differenz aus einem Trainings-Datensatz (oder Test-Vektor) und dem Datensatz, der das betrachtete Neuron kennzeichnet. Der Symptom-Schwellwert wird durch einen Vektor der Dimension des Neurons ausgedrückt. Er wird pro Signal bestimmt. Beispielsweise kann der Schwellwert je Signal 0,15+0,03 Toleranz betragen. Der Symptom-Schwellwert gibt demnach an, wie groß zu einem Zeitpunkt die Differenz zwischen einem Trainings-Datensatz und dem Datensatz, der das betrachtete Neuron kennzeichnet, sein darf. Demnach besitzt jeder Wert des n-Tupels jedes Neurons der SOM einen eigenen Schwellwert (Symptom-Schwellwert). Werden als Trainingsdaten Gut-Daten verwendet und ist der Schwellwert verhältnismäßig klein gewählt, so sind die betrachteten Datensätze sehr ähnlich zu den Gut-Daten, also dem im Knoten der SOM hinterlegten Datensatz für den Normalbetrieb. Der Schwellwert ist somit entscheidend für die Qualität der Anzeige der Unsicherheit der Prädiktion, also für die Qualität des Vertrauensbands.

Pro Prozessschritt oder Batch (welcher aus mehreren Prozessschritten besteht) werden anschließend in der Lernphase für alle Zeitstempel alle zulässigen, zeitlichen Verläufe von Siegerneuronen ermittelt und gespeichert.

Dies bedeutet, dass für jeden Zeitpunkt eines Prozessschritts oder Batches für einen Testvektor oder repräsentativen Datensatz (beispielsweise einen Gut-Datensatz, welcher einen Normalbetrieb repräsentiert) der Abstand zu jedem Neuron der Karte bestimmt wird. Das Neuron, zu dem der Abstand des Gut-Datensatzes minimal ist, ist das Siegerneuron. Wird dieses minimale Abstandsmaß Zeitstempel für Zeitstempel ermittelt, so entsteht eine zeitliche Abfolge der Siegerneuronen, der so genannte Siegerneuronenverlauf oder auch Referenzpfad. Optional kann für diese Verläufe erfindungsgemäß auch die Bedingung der Neuronen-Ähnlichkeit erfüllt sein. Bei der Neuronen-Ähnlichkeit handelt sich um alle Neuronen, für die der Abstand eines repräsentativen Datensatzes zum Siegerneuron innerhalb der Symptom-Toleranz dieses Neurons liegen. Damit können sich pro Zeitstempel mehrere zulässige Siegerneuronen ergeben und somit unter Berücksichtigung der Zeitabhängigkeit in Summe eine Vielzahl von Siegerneuronenverläufen. Diese Siegerneuronenverläufe werden pro SOM und damit für jeden Prozessschritt oder Batch separat bestimmt und gespeichert.

Nach diesem Schritt ist für den betrachteten Prozessschritt (oder den gesamten Batch-Prozess) die Lernphase abgeschlossen. Das Einlernen oder auch Trainieren einer SOM spielt beim erfindungsgemäßen Verfahren und System eine wichtige Rolle, da hier das für den "Blick in die Zukunft" benötigte Wissen über den Prozess in der SOM, den Siegerneuronen und den Siegerneuronenverläufen abgebildet wird. Wird nun in einer Auswertungsphase ein Zeitpunkt innerhalb dieses Prozessschritts oder Batches bestimmt, ab welchem eine Prädiktion des Betriebs der technischen Anlage stattfinden soll, kann basierend auf dem bekannten eingelernten Wissen für aktuelle Datensätze das zukünftige Verhalten prädiziert werden. Der Begriff "zukünftig" kennzeichnet hierbei stets die Zeitspanne nach dem zuvor bestimmten Zeitpunkt. Je nachdem, wie dieser Zeitpunkt gewählt ist, kann diese Zeitspanne auch in der Vergangenheit liegen.

In der Auswertungsphase werden nun statt mit historischen Datensätzen eines Prozessschritts oder Batches mit aktuellen, zu überwachenden Datensätzen dieses Prozessschritts oder Batches die zeitlichen Verläufe der Siegerneuronen ermittelt, d.h. es wird unter Verwendung aktueller Datensätze dieses Prozessschritts oder Batches mittels der eingelernten Siegerneuronenverläufe mindestens ein Siegerneuronenverlauf für den gesamten Prozessschritt oder Batch ermittelt. Zeitstempel für Zeitstempel wird das Siegerneuron ermittelt. Dies bedeutet, dass pro Zeitstempel für den aktuellen Datensatz der Abstand zu jedem Neuron der Karte bestimmt wird. Das Neuron, zu dem der Abstand des aktuellen Datensatzes minimal ist, ist das Siegerneuron. Anschließend wird überprüft, ob das Siegerneuron sich auf einem der in der Lernphase ermittelten, zulässigen Siegerneuronenverläufe befindet. Dieser Siegerneuronenverlauf (des gesamten Prozessschritts oder des gesamten Batches) wird dann zur Prädiktion verwendet. Es werden demnach alle Schritte zur Auswertung bis zum zuvor bestimmten Zeitpunkt (an dem die Prädiktion beginnen soll, also dem Startzeitpunkt der Prädiktion) durchgeführt. Die in den Neuronen dieses Siegerneuronenverlaufs gespeicherten Werte der Prozessvariablen nach dem zuvor bestimmten Zeitpunkt werden dann als prädizierter Verlauf auf einer Ausgabeeinheit angezeigt.

Werden in der Auswertungsphase mehrere Siegerneuronenverläufe ermittelt, so wird der wahrscheinlichste der Siegerneuronenverläufe bestimmt. Dies geschieht durch Ermittlung der Symptome aller vergangenen Zeitstempel dieses Prozessschritts oder Batches. Ein für einen aktuellen Zeitstempel relevantes Symptom wird bestimmt, indem die Differenz aus dem Datensatz des aktuellen Zeitstempels zu dem zuvor bestimmten zu vergleichenden Neuron gebildet wird, wobei nur die Differenzen von Prozessvariablen berücksichtigt werden, die einen vorgegebenen Schwellwert überschreiten. Der Vorteil besteht darin, dass nun verifiziert wird, ob sich die pro Zeitstempel ermittelten Siegerneuronen sozusagen auf dem "richtigen" Siegerneuronenverlauf befinden, d.h. demjenigen, der der Realität am nächsten kommt. Dabei kann optional auch die Neuronen-Ähnlichkeit berücksichtigt werden, d.h. es wird überprüft, ob der Abstand eines Datenvektors zum Siegerneuron innerhalb des Symptom-Schwellwerts aller Neuronen aus den in der Lernphase gespeicherten Verläufen zum aktuellen Zeitpunkt liegen. Der wahrscheinlichste zulässige Siegerneuronenverlauf wird somit für die Anzeige des prädizierten Verlaufs der Prozessvariablen verwendet, was die Genauigkeit des erfindungsgemäßen Vorhersageverfahrens deutlich erhöht.

Die jeweiligen Symptom-Toleranzen der Neuronen des zuvor ermittelten Siegerneuronenverlaufs können in einer vorteilhaften Ausführungsvariante als Unsicherheit bei der Anzeige des prädizierten Verlaufs verwendet werden. Eine Unsicherheit bezeichnet den Fall, dass mehrere relevante Zustände vorliegen können. Ein Anlagenfahrer erhält somit vorteilhaft ein Angebot an alternativen Zuständen, welche ihm erlauben, besser abzuschätzen, wie sich eine bestimmte Prozessvariable entwickeln wird. Wenn selbst innerhalb eines Unsicherheitsbands (oder Vertrauensbands) kritische Werte auftauchen, so kann dies ein Hinweis auf kritische Zustände sein und ein Anlagenfahrer kann so schneller reagieren.

Im Rahmen einer weiteren bevorzugten Weiterbildung des erfindungsgemäßen Verfahrens und Systems werden anstelle der Symptom-Schwellwerte oder zusätzlich zu den Symptom-Schwellwerten Quantisierungsfehler mittels der Trainingsdaten ermittelt und bei der Auswertung für die Ermittlung des wahrscheinlichsten Siegerneuronenverlaufs verwendet.

Der Quantisierungsfehler ist ein Abstandsmaß zum jeweiligen Neuron und wird als Betrag aus der Differenz zwischen dem Siegerneuron und dem betrachteten Datensatz berechnet. Mit anderen Worten: Betrachtet wird nun ein aktueller Prozesszustandsvektor eines laufenden Betriebs. Dieser wird nun mit allen Neuronen der SOM verglichen, d.h. der euklidische Abstand des Prozesszustandsvektors zu allen Neuronen wird bestimmt. Für das Neuron mit dem kleinsten euklidischen Abstand wird anschließend geschaut, ob der Abstandswert unterhalb des Schwellwerts für dieses Neuron liegt. Dieser Abstand wird auch als Quantisierungsfehler bezeichnet. Dieser ist genau so groß, dass beispielsweise im Falle von betrachteten Gut-Daten alle Gut-Daten gerade noch als gut klassifiziert werden. Bei der Betrachtung der Quantisierungsfehler, die sich mit den Gut-Daten ergeben, ist es ebenso möglich, diese Werte zur Ermittlung von Schwellwerten für die Neuronen einer Karte zu benutzen. Auch Toleranzen können hierbei mit aufgeschlagen werden. Quantisierungsfehler und der Betrag der Symptom-Schwellwerte sind somit Skalare, welche den Abstand eines Datenvektors (oder Datensatzes) zu einem Datensatz eines zu vergleichenden Neurons kennzeichnen.

Die Nutzung des Quantisierungsfehlers ist zwar weniger robust als die Auswertung über die einzelnen Symptome, erfordert jedoch weniger Rechenleistung und macht das erfindungsgemäße Verfahren somit vorteilhaft schneller.

In einer weiteren vorteilhaften Ausführungsvariante wird als Unsicherheit des prädizierten Verlaufs die Vereinigungsmenge aller Symptom-Toleranzen aller in der Auswertungsphase ermittelten Siegerneuronenverläufe des Prozessschritts oder Batches verwendet. Diese enthält damit alle aus Sicht des Verfahrens möglichen zukünftigen Verläufe, so dass der Anlagenfahrer das zukünftige Verhalten noch sicherer beurteilen kann.

Grundsätzlich endet die Prädiktion mit dem Ende des aktuellen Prozessschritts. Wurden die Siegerneuronenverläufe jedoch für einen ganzen Batch, bestehend aus mehreren Prozessschritten, abgespeichert, so ist auch eine Prädiktion für die nachfolgenden Schritte möglich. In einer besonders vorteilhaften Ausführungsvariante wird ein Zeitpunkt festgelegt, an welchem die Prädiktion des Betriebs der technischen Anlage enden soll. Dies erlaubt einem Anlagenfahrer bestimmte Zeitintervalle für die Prädiktion auszuwählen, die besonderer Aufmerksamkeit bedürfen, zum Beispiel, weil in diesem Zeitintervall in der Vergangenheit eine signifikante Prozessabweichung oder ein Alarm oder ein bestimmtes Ereignis aufgetreten ist.

In der Erfindung werden eine konfigurierbare Auswahl der prädizierten zeitlichen Verläufe der Prozessvariablen, Schrittidentifier, Anomalien und/oder Symptome gleichzeitig und/oder in Korrelation zueinander als zeitliche Verläufe auf einer Anzeige-Einheit dargestellt. Die Überwachung des verfahrenstechnischen Prozesses wird auf diese Weise für einen Anlagenfahrer oder den Bediener einer erfindungsgemäßen Software-Applikation erleichtert. Um mit den dargestellten Ergebnissen an einer Problembehandlung effizient arbeiten zu können, ist eine konfigurierbare Auswahl der Ergebnisse besonders vorteilhaft. Durch eine angemessene Darstellung können Anlagenbediener in kritischen Situationen schnell handeln und einen Fehlerfall vermeiden. Eine schnelle Interaktion kann sowohl Kosten und Zeit einsparen als auch schlimmere Gefahren abwenden.

Die zuvor ausgeführte Aufgabe wird ferner durch ein System zur Prädiktion des Betriebs einer technischen Anlage gelöst, welches derart ausgebildet ist, dass mindestens eine Einheit zum Trainieren von SOMs, zum Speichern relevanter Daten und eine Einheit zum Auswerten aktueller Datensätze mit Hilfe der zuvor trainierten SOMs vorgesehen ist.

Bei dem Begriff System kann es sich sowohl um ein Hardwaresystem wie einem Computersystem bestehend aus Servern, Netzwerken und Speichereinheiten als auch um ein Softwaresystem wie einer Softwarearchitektur oder ein größeres Softwareprogramm handeln. Auch eine Mischung aus Hardware und Software ist denkbar, beispielsweise eine IT-Infrastruktur wie eine Cloud-Struktur mit ihren Services. Bestandteile einer solchen Infrastruktur sind üblicherweise Server, Speicher, Netzwerke, Datenbanken, Software-Anwendungen und -dienste, Datenverzeichnisse und Datenverwaltungen. Insbesondere virtuelle Server gehören ebenso zu einem System dieser Art.

Das erfindungsgemäße System kann auch Teil eines Computersystems sein, welches sich räumlich getrennt vom Standort der technischen Anlage, befindet. Das angeschlossene externe System, weist dann vorteilhaft die Auswerteeinheit auf, welche auf die Komponenten der technischen Anlage und/oder die damit verbundenen Datenspeicher zugreifen kann, und die ausgebildet ist die Diagnoseergebnisse zu visualisieren und zu einer Anzeigeeinheit zu übertragen. Auf diese Weise kann zum Beispiel eine Kopplung mit einer Cloud-Infrastruktur erfolgen, was weiterhin die Flexibilität der Gesamtlösung erhöht.

Auch lokale Implementierungen auf Computersystemen der technischen Anlage können vorteilhaft sein. So ist eine Implementierung z.B. auf einem Server des Prozessleitsystems insbesondere für sicherheitsrelevante Prozesse besonders geeignet.

Das erfindungsgemäße Verfahren wird somit bevorzugt in Software oder in einer Kombination Soft-/Hardware implementiert, so dass die Erfindung auch ein Computerprogramm mit durch einen Computer ausführbaren Programmcodeanweisungen zur Implementierung des Diagnoseverfahrens betrifft. In diesem Zusammenhang betrifft die Erfindung auch ein Computerprogrammprodukt, insbesondere einen Datenträger oder ein Speichermedium, mit einem durch einen Computer ausführbaren derartigen Computerprogramm. Ein solches Computerprogramm kann, wie oben beschrieben, in einem Speicher eines Servers eines Prozessleitsystems geladen werden, so dass die Überwachung des Betriebs der technischen Anlage automatisch durchgeführt wird, oder das Computerprogramm kann bei einer Cloud-basierten Überwachung einer technischen Anlage in einem Speicher eines Remote-Service-Rechners vorgehalten oder in diesen ladbar sein.

Die zuvor ausgeführte Aufgabe wird entsprechend auch durch eine graphische Benutzeroberfläche (GUI, graphical user interface) gelöst, welche auf einer Anzeigeeinheit angezeigt wird, und welche dazu ausgebildet ist, die prädizierten Verläufe des erfindungsgemäßen Systems in all seinen Varianten anzuzeigen.

Im Folgenden wird die Erfindung anhand der Figuren und anhand eines Ausführungsbeispiels näher beschrieben und erläutert.

Es zeigen
Figur 1 eine schematische Darstellung des erfindungsgemäßen Systems zur Prädiktion
Figur 2 ein Beispiel einer Darstellung der prädizierten Verläufe einiger Prozessvariablen auf einer Anzeige-Einheit

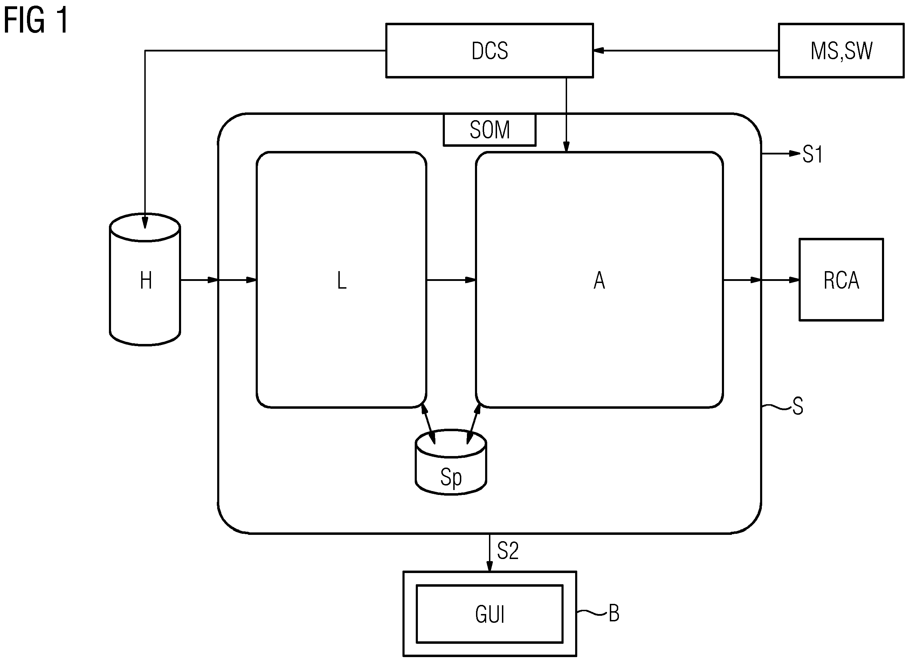

In Fig. 1 ist eine schematische Darstellung zur Erläuterung des erfindungsgemäßen Systems S zur Prädiktion gezeigt, bei dem ein Automatisierungssystem oder ein Prozessleitsystem DCS einen verfahrenstechnischen Prozess steuert, regelt und/oder überwacht. Zur Steuerung des Prozesses ist das Prozessleitsystem DCS mit einer Vielzahl von Feldgeräten (nicht dargestellt) verbunden. Messumformer dienen zur Erfassung von Prozessvariablen, wie beispielsweise Temperatur T, Druck P, Durchflussmenge F, Füllstand L, Dichte oder Gaskonzentration eines Mediums, die zumeist mittels Sensoren erfasst werden und somit Messwerten MS entsprechen. Durch Stellglieder kann der Prozessablauf in Abhängigkeit von erfassten Prozessvariablen beispielsweise den Vorgaben des Automatisierungsprogramms entsprechend, welche in Sollwerten SW ausgedrückt werden, beeinflusst werden. Als Beispiele für Stellglieder seien ein Regelventil, eine Heizung oder eine Pumpe genannt. Zur Überwachung des Betriebs der Anlage wird eine Vielzahl von Datensätzen, die für den Betrieb der Anlage kennzeichnend sind, in Abhängigkeit von der Zeit t erfasst und in diesem Ausführungsbeispiel in einem Datenspeicher H (häufig ein Archiv) abgespeichert. Zeitabhängig bedeutet hier entweder zu bestimmten einzelnen Zeitpunkten oder mit einer Abtastrate in regelmäßigen Abständen oder auch annähernd kontinuierlich. In den Datensätzen sind somit die Prozessvariablen mit den jeweiligen Zeitstempeln umfasst wie bspw. für die Temperatur: T= (T (t1), T(t2), T(t3) ... T(tN))^{T} wobei N eine beliebige natürliche Zahl darstellt und der Anzahl der Zeitstempel eines Prozessschritts entspricht. Bei einem Batch-Prozess kann es mehrere Prozessschritte geben, die jeweils eine bestimmte Phase des Prozesses charakterisieren, wie Aufheizen des Reaktors, Rühren innerhalb des Reaktors sowie Abkühlen des Reaktors. Dieser Prozess würde somit aus 3 Prozessschritten bestehen.

Mittels des Systems S werden die Datensätze, die Werte von Prozessvariablen mit entsprechenden Zeitstempeln enthalten, ausgewertet, um zukünftige zeitliche Verläufe von Prozessvariablen anzuzeigen, damit eventuell geeignete Maßnahmen zur Fehlerbehandlung getroffen werden können.

In der gezeigten Ausführungsvariante umfasst das Diagnosesystem S im Wesentlichen eine Einheit L zum Trainieren der selbst-organisierenden Karten, eine Einheit Sp zum Speichern der zur Durchführung des Verfahrens notwendigen Größen und eine Einheit A zum Auswerten der aktuellen Datensätze eines Prozessschritts oder Batches mit Hilfe der in der Lernphase trainierten selbst-organisierenden Karte. Je nach Ausführung können diese Einheiten auch als eine Einheit zusammengefasst sein oder in anderen Varianten ausgestaltet sein, je nach Implementierung.

Ausgangssignale des Systems können weiteren Systemen wie beispielsweise einem weiteren Prozessleitsystem oder Teilen davon zugeführt werden oder zur Weiterverarbeitung verwendet werden (Signal S1). Ferner können Ausgangssignale des Systems zur Visualisierung an eine Ausgabeeinheit B weitergegeben werden (Signal S2), sofern das System eine solche nicht selbst umfasst. Die Anzeigeeinheit B kann direkt an das System anschließbar sein oder je nach Implementierung beispielsweise über einen Datenbus mit dem System verbunden sein. Bei der Anzeigeeinheit B kann es sich auch um ein Bedien- und Beobachtungsgerät eines Prozessleitsystems handeln. Auf der graphischen Benutzeroberfläche des Bedien- und Beobachtungsgerätes können durch einen Bediener, falls gewünscht, Änderungen an der selbstorganisierenden Karte, an den Schwellwerten oder sonstigen Parametern vorgenommen werden.

Die Einheit L zum Trainieren der selbst-organisierenden Karten (SOM) verwendet dazu historische Datensätze mit zeitabhängigen Messwerten von Prozessvariablen (als n-Tupel) und ist dazu mit dem Datenspeicher H verbunden. Die Einheit L kann vorteilhaft offline betrieben werden, da der Einlernvorgang rechenintensiv ist. Denn zum Einlernen der selbstorganisierenden Karten sollten zahlreiche historische Verläufe von Prozessschritten aufgenommen werden. Neben dem Einlernen der Karten werden in der Einlernphase Schwellwerte, Siegerneuronenverläufe und weitere Größen bestimmt und in dem Speicher Sp zur weiteren Verwendung abgelegt.

Die Einheit A zum Auswerten der aktuellen Datensätze eines Prozessschritts oder Batches mithilfe der in der Lernphase trainierten selbst-organisierenden Karten kann beispielsweise online betrieben werden, um den Bediener einer Anlage bei der Überwachung des Anlagenzustands zu unterstützen. Dabei besteht die Möglichkeit, die aktuellen Prozesswerte aus dem Prozessleitsystem DCS durch das erfindungsgemäße Verfahren auszuwerten.

Die Auswerteeinheit A oder das System S kann optional auch mit einer Einheit RCA zur weitergehenden Ursachenermittlung verbunden werden, an welche beispielsweise Vergleiche zwischen den prädizierten und tatsächlichen Verläufen der Prozessvariablen durchgeführt werden können, aufgrund der eine weitere Diagnose wie zum Beispiel Aussagen über Anomalien getroffen werden können.

Das System S zur Durchführung des erfindungsgemäßen Verfahrens kann beispielsweise auch in einer Client-Server-Architektur realisiert werden. Hierbei dient der Server der Bereitstellung von gewissen Diensten wie dem erfindungsgemäßen System, zur Bearbeitung einer genau definierten Aufgabe (hier die Prozessvariablen-Prädiktion). Der Client (hier die Anzeige-Einheit B) ist in der Lage, die entsprechenden Dienste vom Server anzufordern und zu nutzen. Typische Server sind Webserver zum Bereitstellen von Web-Seiten-Inhalten, Datenbankserver zum Speichern von Daten oder Anwendungsserver zum Bereitstellen von Programmen. Die Interaktion zwischen dem Server und Client erfolgt über geeignete Kommunikationsprotokolle wie http oder jdbc.

In einer weiteren Ausführungsvariante können das System S oder Teile davon grundsätzlich auch in einer Automatisierungsumgebung als Software-Funktionsbaustein ausgebildet sein. Dies gilt insbesondere für die Auswerteeinheit A, da sie erheblich weniger Ressourcen (Rechenleistung und Speicherbedarf) als die Lerneinheit L mit ihren eher umfangreichen Lernalgorithmen benötigt und daher auch für eine Implementierung auf der Feld- und Automatisierungsebene geeignet ist.

Da es sich bei den Verfahren zur Anlagenüberwachung um keine sicherheitsrelevanten bzw. zeitkritischen Funktionen eines Leitsystems handelt, besteht alternativ auch die Möglichkeit, die Daten des Prozesses im Leitsystem zu sammeln und auf einem Server zu "archivieren", welcher die eigentliche Analyse vornimmt. Eine weitere Möglichkeit ist der Einsatz einer Cloud Umgebung (z.B. der MindSphere) oder als On-Premise Lösung die direkte Speicherung der Daten auf einem speziellen Datenbankserver auf der Leitsystemebene.

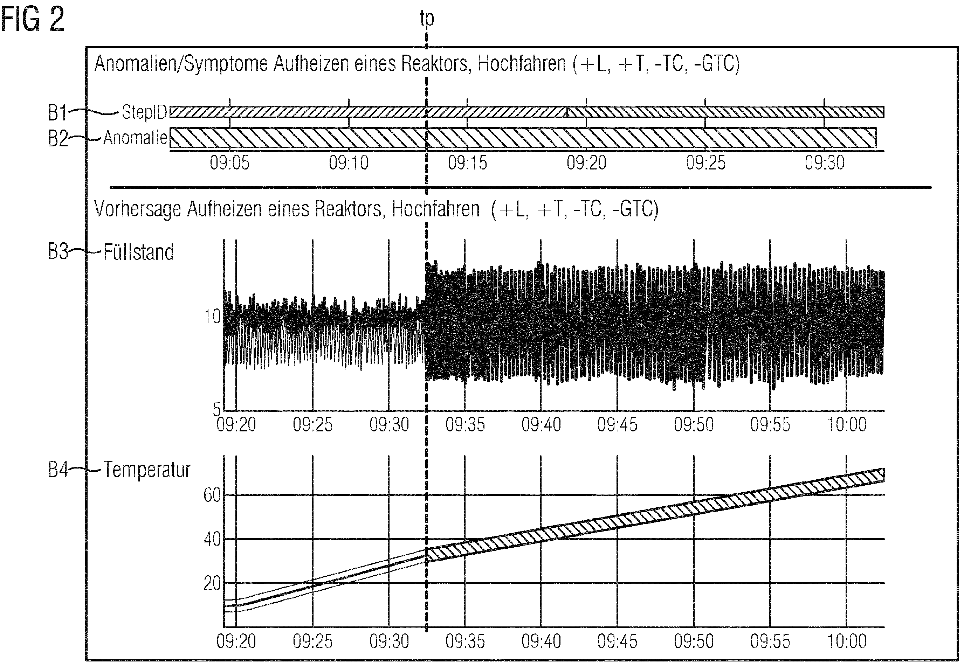

Figur 2 zeigt eine übersichtliche visuelle Darstellung der Ergebnisse des Systems S in Form einer Trenddarstellung in Abhängigkeit von der Zeit t. Ferner sind Balken gezeigt, welche in Zusammenhang mit bestimmten Prozessinformationen stehen und häufig in bestimmten Farben gezeigt sind, was den Bediener dabei unterstützen soll, kritische Situationen schneller zu erkennen. Der oberste Balken StepID (Bezugszeichen B1) kennzeichnet den jeweiligen Prozessschritt. Der darunter angeordnete Balken B2 kennzeichnet das Vorliegen einer Anomalie. Er kann beispielsweise grün oder leicht schraffiert für den Normalbetrieb angezeigt werden und rot oder stark schraffiert) für das Vorliegen einer Abweichung vom Normalbetrieb.

Unterhalb der Balken sind die zeitlichen Verläufe von Prozessvariablen eines Reaktors angezeigt: Das Bezugszeichen B3 kennzeichnet den zeitlichen Verlauf des Füllstands des Reaktors und das Bezugszeichen B4 kennzeichnet den zeitlichen Verlauf der Temperatur des im Reaktor befindlichen Mediums. Dabei sind jeweils bis zu dem Zeitpunkt tp (hier 9:32), der zuvor festgelegt wurde, die tatsächlichen, aktuellen Verläufe dargestellt und nach dem Zeitpunkt tp die mittels des erfindungsgemäßen Verfahrens prädizierten Verläufe des Füllstands und der Temperatur. Die über die Symptom-Schwellwerte berechneten Unsicherheiten sind anhand der verbreiterten Kurvenverläufe deutlich zu erkennen.

Es soll erwähnt werden, dass es sich bei dem Zeitbereich vor der Zeit tp und dem Zeitbereich nach tp um beliebige Zeitbereiche handeln kann. Dies bedeutet, dass auch beide Zeitbereiche in der Vergangenheit liegen können oder der erste Zeitbereich in der Vergangenheit und der zweite tatsächlich in der Zukunft. Die Erfindung erlaubt somit einem Anlagenfahrer auch, innerhalb eines Prozessschritts oder Batches, der in der Vergangenheit liegt, einen bestimmten Zeitpunkt auszuwählen, die entsprechende eingelernte SOM für diesen Prozessschritt oder Batch auszuwählen und dann nachzuschauen, wie die zeitlichen Verläufe nach dem Zeitpunkt tp sich basierend auf dem erfindungsgemäßen Verfahren entwickeln würden. Er kann anschließend diese prädizierten Verläufe mit den tatsächlich eingetretenen Verläufen vergleichen, um so ein besseres Verständnis für den historischen Prozessschritt oder Batch zu entwickeln.

## Patentansprüche

1. Verfahren zur Überwachung des Betriebs einer technischen Anlage, in welcher ein verfahrenstechnischer Prozess mit mindestens einem Prozessschritt abläuft,
wobei den Betrieb der Anlage kennzeichnende Datensätze mit Werten von Prozessvariablen (L, T, F, ...) zeitabhängig erfasst und in einem Datenspeicher abgelegt werden,
wobei in einer Lernphase unter Verwendung historischer Datensätze,
- pro Prozessschritt oder Batch eine selbstorganisierende Karte, SOM, trainiert wird,
- pro SOM Symptom-Schwellwerte und deren Toleranzen für jedes Neuron ermittelt und gespeichert werden, und
- pro Prozessschritt oder Batch für alle Zeitstempel alle zulässigen, zeitlichen Verläufe von Siegerneuronen ermittelt und gespeichert werden,
wobei in einer Auswertungsphase
ein Zeitpunkt (tp) bestimmt wird, ab welchem eine Prädiktion des Betriebs der technischen Anlage stattfinden soll,
- anschließend unter Verwendung aktueller Datensätze des mindestens einen Prozessschritts mittels der eingelernten Siegerneuronenverläufe mehr als ein Siegerneuronenverlauf für den gesamten Prozessschritt oder Batch bestimmt wird,
**dadurch gekennzeichnet,**
- **dass** der wahrscheinlichste der zuvor bestimmten Siegerneuronenverläufe durch Ermittlung der Symptome aller vergangenen Zeitstempel dieses Prozessschritts oder Batches bestimmt wird und die in den Neuronen dieses Siegerneuronenverlaufs gespeicherten Werte der Prozessvariablen nach dem zuvor bestimmten Zeitpunkt (tp) als prädizierter Verlauf auf einer Anzeige-Einheit (B) angezeigt werden und somit einen Bediener der technischen Anlage bei der Anlagenüberwachung unterstützt.

2. Verfahren nach Anspruch 1,
**dadurch gekennzeichnet, dass** die Symptom-Toleranzen des mindestens einen zuvor ermittelten Siegerneuronenverlaufs bei der Anzeige als Unsicherheit des prädizierten Verlaufs verwendet werden.

3. Verfahren nach Anspruch 1 oder 2,
**dadurch gekennzeichnet,**
**dass** anstelle der Symptom-Schwellwerte oder zusätzlich zu den Symptom-Schwellwerten Quantisierungsfehler mittels der Trainingsdaten ermittelt werden und bei der Auswertung für die Ermittlung des wahrscheinlichsten Siegerneuronenverlaufs verwendet werden.

4. Verfahren nach Anspruch 3,
**dadurch gekennzeichnet,**
**dass** als Unsicherheit des prädizierten Verlaufs die Vereinigungsmenge aller Symptom-Toleranzen aller in der Auswertungsphase ermittelten Siegerneuronenverläufe des Prozessschritts oder Batches verwendet werden.

5. Verfahren nach einem der vorhergehenden Ansprüche,
**dadurch gekennzeichnet,**
**dass** ein Zeitpunkt festgelegt wird, an welchem die Prädiktion des Betriebs der technischen Anlage enden soll.

6. Verfahren nach einem der vorhergehenden Ansprüche,
**dadurch gekennzeichnet,**
**dass** eine konfigurierbare Auswahl der prädizierten zeitlichen Verläufe der Prozessvariablen zusammen mit Schrittidentifiern, Anomalien und/oder Symptomen gleichzeitig und/oder in Korrelation zueinander auf der Anzeige-Einheit (B) dargestellt werden.

7. System (S) zur Überwachung des Betriebs einer technischen Anlage, in welcher ein verfahrenstechnischer Prozess mit mindestens einem Prozessschritt abläuft,
umfassend mindestens:
- eine Einheit (L) zum Trainieren von selbst-organisierenden Karten (SOM) unter Verwendung von historischen Datensätzen mit Werten von zeitabhängig ermittelten Prozessvariablen (L, T, F, ...), welche einen Betrieb der Anlage kennzeichnen und welche ausgebildet ist, die Schritte der Ansprüche 1 bis 6 durchzuführen, welche die Lernphase des Verfahrens betreffen,
- eine Einheit (Sp) zum Speichern der SOMs, von Schwellwerten, Toleranzen und weiterer Daten, die zur Durchführung des Verfahrens nach einem der Ansprüche 1 bis 6 notwendig sind,
- eine Einheit (A) zum Auswerten der aktuellen Datensätze eines Prozessschritts oder Batches mit Hilfe der in der Lernphase trainierten selbst-organisierenden Karten (SOM), wobei die Auswerteeinheit derart ausgebildet ist, die Schritte der Ansprüche 1 bis 6 durchzuführen, welche die Auswertungsphase des Verfahrens betreffen.

8. System (S) nach Anspruch 7,
welches zusätzlich eine Einheit (B) zum Anzeigen und Ausgeben der mittels der Auswerteeinheit (A) ermittelten prädizierten zeitlichen Verläufe umfasst oder zumindest eine Schnittstelle (S2) zur Verbindung mit einer Einheit (B) zum Anzeigen und Ausgeben der mittels der Auswerteeinheit ermittelten prädizierten zeitlichen Verläufe umfasst.

9. Computerprogramm, insbesondere Software-Applikation, mit durch einen Computer ausführbaren Programmcodeanweisungen zur Implementierung des Verfahrens nach einem der Ansprüche 1 bis 6, wenn das Computerprogramm auf einem Computer ausgeführt wird.

10. Computerprogrammprodukt, insbesondere Datenträger oder Speichermedium, mit einem durch einen Computer ausführbaren Computerprogramm gemäß Anspruch 9.

## Claims

1. Method for supervising the operation of a technical installation, in which a process engineering process having at least one process step is running,
wherein data sets characterising the operation of the installation with values of process variables (L, T, F, ...) are acquired in a time-dependent manner and are stored in a data memory,
wherein in a learning phase, using historical data sets,
- a self-organising map, SOM, is trained for each process step or batch,
- for each SOM symptom, threshold values and their tolerances are ascertained for each neuron and stored, and
- all permitted temporal profiles of winner neurons are ascertained and stored for each process step or batch for all time stamps,
wherein in an evaluation phase
- a point in time (tp) is determined, starting from which a prediction of the operation of the technical installation is to take place,
- subsequently, using current data sets of the at least one process step, more than one winner neuron profile for the entire process step or batch is determined by means of the winner neuron profiles learned,
**characterised in that**
- the most probable of the previously determined winner neuron profiles is determined by ascertaining the symptoms of all past time stamps of this process step or batch and the values of the process variables stored in the neurons of this winner neuron profile after the previously determined point in time (tp) are displayed as the predicted profile on a display unit (B) and thus supports an operator of the technical installation in the installation supervision.

2. Method according to claim 1,
**characterised in that** the symptom tolerances of the at least one winner neuron profile previously ascertained are used in the display as uncertainty of the predicted profile.

3. Method according to claim 1 or 2,
**characterised in that**,
instead of the symptom threshold values or in addition to the symptom threshold values, quantisation errors are ascertained by means of the training data and are used in the evaluation for the ascertainment of the most probable winner neuron profile.

4. Method according to claim 3,
**characterised in that**
the union set of all symptom tolerances of all winner neuron profiles of the process step or batch ascertained in the evaluation phase is used as the uncertainty of the predicted profile.

5. Method according to one of the preceding claims,
**characterised in that**
a point in time is defined, at which the prediction of the operation of the technical installation is to end.

6. Method according to one of the preceding claims,
**characterised in that**
a configurable selection of the predicted temporal profiles of the process variables together with step identifiers, anomalies and/or symptoms, is shown at the same time and/or in correlation with one another on the display unit (B).

7. System (S) for supervising the operation of a technical installation, in which a process engineering process with at least one process step is executing,
comprising at least:
- a unit (L) for training of self-organising maps (SOM) using historical data sets with values of process variables (L, T, F, ...) ascertained as a function of time that characterise an operation of the installation, and which is embodied to carry out the steps of claims 1 to 6, which relate to the learning phase of the method,
- a unit (Sp) for storage of SOMs, of threshold values, tolerances and further data, which is necessary for carrying out the method according to one of claims 1 to 6,
- a unit (A) for evaluation of the current data sets of a process step or batch with the aid of the self-organising maps (SOM) trained in the learning phase, wherein the evaluation unit is embodied in such a way as to carry out the steps of claims 1 to 6 that relate to the evaluation phase of the method.

8. System (S) according to claim 7,
which additionally comprises a unit (B) for display and output of the predicted temporal profiles ascertained by means of the evaluation unit (A) or comprises at least one interface (S2) for connection to a unit (B) for display and output of the predicted temporal profiles ascertained by means of the evaluation unit.

9. Computer program, in particular a software application, with program code instructions able to be executed by a computer for implementation of the method according to one of claims 1 to 6, when the computer program is executed on a computer.

10. Computer program product, in particular a data medium or memory medium, with a computer program able to be executed by a computer according to claim 9.

## Revendications

1. Procédé de contrôle du fonctionnement d'une installation technique, dans laquelle un processus industriel ayant au moins un stade de processus se déroule,
dans lequel on saisit en fonction du temps par des valeurs de variables (L, T, F,...) de processus des ensembles de données caractérisant le fonctionnement de l'installation et on les met dans une mémoire de données,
dans lequel dans une phase d'enseignement en utilisant des ensembles de données historiques,
- par stade de processus ou lot, on fait subir un apprentissage à une carte d'auto-organisation, SOM,
- par SOM, on détermine et on met en mémoire des valeurs de seuil de symptôme et leurs tolérances pour chaque neurone, et
- par stade de processus ou lot, on détermine et on met en mémoire pour tous les horodatages toutes les évolutions admissibles en fonction du temps de neurones vainqueurs,
dans lequel dans une phase d'évaluation
on détermine un instant (tp), à partir duquel une prédiction du fonctionnement de l'installation technique doit avoir lieu,
- ensuite en utilisant des ensembles de données en cours du au moins un stade de processus, on détermine au moyen des évolutions de neurones vainqueurs ayant subi un enseignement plus d'une évolution de neurones vainqueurs pour tout le stade de processus ou lot,
**caractérisé**
- **en ce que** l'on détermine, par détermination des symptômes de tous les horodatages passés de ce stade de processus ou lots, la plus probable des évolutions de neurones vainqueurs déterminées auparavant et on affiche sur une unité (B) d'affichage, comme évolution prédite, les valeurs, mémorisées dans les neurones de cette évolution de neurones vainqueurs, des variables de processus après l'instant (tp) déterminé auparavant,
et l'on prête ainsi assistance à un opérateur de l'installation technique lors du contrôle de l'installation.

2. Procédé suivant la revendication 1,
**caractérisé**
**en ce que** l'on utilise lors de l'affichage, comme incertitude de l'évolution prédite, les tolérances de symptôme de la au moins une évolution de neurones vainqueurs déterminée auparavant.

3. Procédé suivant la revendication 1 ou 2,
**caractérisé**
**en ce que**, au lieu des valeurs de seuil de symptôme ou en plus des valeurs de seuil de symptôme, on détermine, au moyen des données d'apprentissage, des erreurs de quantification et on les utilise lors de l'évaluation pour la détermination de l'évolution de neurones vainqueurs la plus probable.

4. Procédé suivant la revendication 3,
**caractérisé**
**en ce que** l'on utilise, comme incertitude de l'évolution prédite, l'ensemble SOM de toutes les tolérances de symptôme de toutes les évolutions de neurones vainqueurs du stade de processus ou du lot déterminées dans la phase d'évaluation.

5. Procédé suivant l'une des revendications précédentes,
**caractérisé**
**en ce que** l'on détermine un instant, où la prédiction du fonctionnement de l'installation technique doit cesser.

6. Procédé suivant l'une des revendications précédentes,
**caractérisé**
**en ce que** l'on représente sur l'unité (B) d'affichage une sélection configurable des évolutions prédites dans le temps des variables de processus, ensemble avec des identifiants de stades, des anomalies et/ou des symptômes en même temps et/ou en corrélation les uns avec les autres.

7. Système (S) de contrôle du fonctionnement d'une installation technique, dans laquelle un processus industriel, ayant au moins un stade de processus se déroule,
comprenant au moins :
- une unité (L) d'apprentissage de cartes (SOM) d'auto-organisation en utilisant des ensembles de données historiques avec des valeurs de variables (L, T, F, ...), déterminées en fonction du temps, qui caractérisent le fonctionnement de l'installation et qui est constituée pour effectuer les stades des revendications 1 à 6, lesquels concernent la phase d'enseignement du procédé,
- une unité (Sp) de mise en mémoire des SOMs, de valeurs de seuils de tolérances et d'autres données, qui sont nécessaires à l'exécution du procédé suivant l'une des revendications 1 à 6,
- une unité (A) d'évaluation des ensembles de données en cours d'un stade de processus ou d'un lot à l'aide des cartes (SOM) d'auto-organisation ayant subi un apprentissage dans la phase d'enseignement, dans lequel l'unité d'évaluation est constituée pour exécuter les stades des revendications 1 à 6, qui concernent la phase d'évaluation du procédé.

8. Système (S) suivant la revendication 7,
qui comprend en outre une unité (B) d'affichage et de sortie des évolutions dans le temps prédites déterminées au moyen de l'unité (A) d'évaluation ou au moins une interface (S2) de liaison à une unité (B) d'affichage et de sortie des évolutions en fonction du temps prédites déterminées au moyen d'une unité d'évaluation.

9. Programme d'ordinateur, en particulier application logiciel, comprenant des instructions de code de programme pouvant être exécutées par un ordinateur pour la mise en œuvre du procédé suivant l'une des revendications 1 à 6, lorsque le programme d'ordinateur est exécuté sur un ordinateur.

10. Produit de programme d'ordinateur, en particulier support de données ou support de mémoire ayant un programme d'ordinateur suivant la revendication 9, pouvant être exécuté par un ordinateur.
